# EUROPEAN PATENT SPECIFICATION

(11) **EP 0 541 171 B1**
(45) Date of publication and mention of the grant of the patent: **28.02.1996**
(21) Application number: 92203368.3
(22) Date of filing: 03.11.1992
(51) Int. Cl.: C08L 71/12, C08L 35/06

(54) **Thermoplastic polymer composition**
Thermoplastische polymerische Mischung
Composition thermoplastique de polymère

(30) Priority: 07.11.1991 NL 9101857
(43) Date of publication of application: 12.05.1993
(73) Proprietor: DSM N.V., NL-6411 TE Heerlen (NL)
(72) Inventor: Koning, Cornelis Eme, NL-6436 EL Schinnen (NL); Borggreve, Reinoldus Jozef Maria, NL-6336 VG Hulsberg (NL); Möller, Martin, NL-7531 LA Enschede (NL); Ikker, Andreas, c/o Institut Charles Sabron, F-67083 Strassbourg (FR)

(56) References cited:
- EP-A- 0 044 703
- FR-A- 2 346 406

## Description

The invention relates to a thermoplastic polymer composition comprising a polyphenylene oxide and a copolymer which contains units of a vinyl-aromatic compound and units of an α,β-unsaturated dicarboxylic acid anhydride.

A polymer composition of this type is disclosed in EP-A-0071785. The polymer composition according to this publication contains a polyphenylene oxide and a styrene/maleic anhydride copolymer. The styrene/maleic anhydride copolymer is grafted onto a rubber in order to increase the notched bar impact strength of the polymer composition.

As described in the above-mentioned patent application, a polymer composition of this type is used to produce shaped components of all types. The mechanical properties are not yet adequate for use of this polymer composition in a number of applications. This applies in particular to the notched bar impact strength of this polymer composition.

The aim of the present invention is to produce a thermoplastic polymer composition comprising a polyphenylene oxide and a copolymer which contains a vinyl-aromatic compound and an α,β-unsaturated dicarboxylic acid anhydride and having greatly improved mechanical properties.

The polymer composition according to the invention is characterized in that it contains 0.1 - 20% by weight of functionalized polystyrene, with respect to the total weight of the polyphenylene oxide, the copolymer and the polystyrene. A functionalized polystyrene is a polystyrene which contains one or more compounds which contain(s) one or more groups chosen from the group comprising the NH₂, hydroxyl, epoxy and oxazoline groups.

It has been found that the polymer composition according to the invention displays both a high heat distortion resistance and a high notched bar impact strength. It has been found that the presence of functionalized polystyrene has a very advantageous effect on the notched bar impact strength of the polymer composition. This is very surprising, especially since the addition of non-functionalized polystyrene does not give rise to this effect.

The polyphenylene oxide in the polymer composition according to the invention can be chosen from the generally known polyphenylene oxides. These polyphenylene oxides can be prepared by the generally known preparation methods. Suitable preparation methods are described, for example, in US-A-3306874, US-A-3306875 and US-A-3257358. Examples of a polyphenylene oxide which is suitable for use in the moulding composition are poly-(2,6-dimethyl-1,4-phenylene oxide), poly-(2,6-dichloro-1,4-phenylene oxide), poly-(2,6-dimethoxy-1,4-phenylene oxide), poly-(2,6- diphenyl-1,4-phenylene oxide) and poly-(2,6-dibromo-1,4-phenylene oxide). A mixture of these compounds can also be used. Poly-(2,6-dimethyl-1,4-phenylene oxide) is preferably used. The amount of the polyphenylene oxide in the polymer composition can vary within wide limits within the scope of the present invention. In practice, usually 10-90% by weight of polyphenylene oxide is used in the polymer composition, with respect to the total weight of the polyphenylene oxide, the copolymer and the polystyrene. This amount is preferably 25-75% by weight.

The copolymer in the polymer composition according to the invention contains units of a vinyl-aromatic compound and units of an α,β--unsaturated dicarboxylic acid anhydride.

Examples of suitable vinyl-aromatic compounds are styrene, α-methylstyrene and styrene derivatives which are substituted on the aromatic ring. Suitable substituents are, for example, halogens and alkyl groups having 1-8 carbon atoms. If desired, a mixture of various vinyl-aromatic compounds can be used. Usually, the copolymer contains 55-95% by weight of vinyl-aromatic compound. Preferably, the vinyl-aromatic compound is styrene, α-methylstyrene, or a mixture thereof.

The α,β-unsaturated dicarboxylic acid anhydride can be chosen, for example, from the group comprising maleic anhydride, itaconic anhydride, citraconic anhydride, methylmaleic anhydride and chloromaleic anhydride. Usually the copolymer contains 5-45% by weight of α,β-unsaturated dicarboxylic acid anhydride. Maleic anhydride is preferably used. If desired, the α,β-unsaturated dicarboxylic acid anhydride can be partially imidized. This can be effected, for example, by allowing the α,β-unsaturated dicarboxylic acid anhydride to react with, for example, NH₃ or aniline. A suitable method for this purpose is described, for example, in DE-C-3430802.

Copolymers of a vinyl-aromatic compound and an α,β-unsaturated dicarboxylic acid anhydride are generally known per se and commercially available.

In order to improve the mechanical properties of the copolymer, the copolymer can be grafted onto a rubber. If desired, the above-mentioned copolymer is grafted onto a rubber which has a glass transition temperature of below 0°C. In general, not more than 40% by weight of the rubber are used, with respect to the total weight of the rubber and the copolymer. Grafting of the copolymer onto a rubber can be effected, for example, by allowing the polymerisation of the individual monomers to take place in the presence of a rubber.

The amount of the copolymer - which may or may not be grafted onto the rubber - in the polymer composition can vary within wide limits within the scope of the present invention. Usually, 10-90% by weight of the copolymer are used in the polymer composition, with respect to the total weight of the polyphenylene oxide, the copolymer and the polystyrene. This amount is preferably 25-75% by weight.

Within the scope of the invention, the functionalized polystyrene is a polymer which is essentially built up of styrene monomer units - optionally the styrene monomer units can be partially replaced by α-methylstyrene monomer units - and which contains one or more compounds which contain(s) one or more groups chosen from the group comprising NH₂, hydroxyl, epoxy and oxazoline groups. The functionalized polystyrene in general has a weight-average molecular weight M_{w} of between 1,000 and 300,000, preferably of between 15,000 and 150,000. The method for the preparation of polystyrene is generally known and is described, for example, in EP-A-71785.

A polystyrene functionalized by a terminal amine group can be prepared, for example, by the method which is described in DE-A-3527909.

A styrene polymer which contains amine and/or oxazoline groups can be obtained, for example, by copolymerizing styrene and/or α-methylstyrene with, for example, vinyloxazoline, m-aminostyrene, p-aminostyrene, m-aminomethylstyrene or p-aminomethylstyrene.

In general, per 3,000 monomer units the functionalized polystyrene contains 1-300 monomer units containing one or more groups chosen from the group comprising NH₂, hydroxyl, epoxy and oxazoline groups. Preferably, the polystyrene is terminally functionalized by a compound of this type. More preferably, the polystyrene is terminally functionalized by an NH₂ and/or an oxazoline group.

If desired, a graft copolymer can be added in order to further improve the mechanical properties of the polymer composition according to the invention. Usually not more than 50% by weight of the graft copolymer is added, with respect to the total weight of the polyphenylene oxide, the copolymer, the polystyrene and the graft copolymer. The graft copolymer comprises, for example, 10-60% by weight of a rubber, having a glass transition temperature of below 0°C, onto which copolymers have been grafted (40-90% by weight, based on the entire graft copolymer).

Examples of such copolymers are copolymers which are made up of 50-90% by weight of monomer units of a vinyl-aromatic compound and 10-50% by weight of acrylonitrile. The vinyl-aromatic compound is preferably styrene, α-methylstyrene, or a mixture thereof. If desired, these copolymers may contain up to 50% by weight of a third comonomer, such as, for example, a (meth)acrylic acid ester. Preferably, the above-mentioned copolymer is a styrene/acrylonitrile copolymer. The rubber can be chosen from the generally known rubbers having a glass transition temperature which is below 0°C. Examples of such rubbers are butadiene rubbers, ethylene-propylene rubbers (EPR), ethylene-propylene-diene rubbers (EPDM), styrene-butadiene rubbers (SBR), isobutene rubbers, nitrile-butadiene rubbers (NBR) and acrylate rubbers, such as polybutyl acrylates. The rubber is preferably a butadiene rubber.

The mechanical properties of the polymer composition according to the invention can also be improved through the addition to the polymer composition according to the invention of a rubber which is completely or partially compatible with the polyphenylene oxide and/or the copolymer which contains units of a vinyl-aromatic compound and units of an α,β-unsaturated dicarboxylic acid anhydride. In general, the rubber can be chosen from the group comprising butadiene rubbers, ethylene-propylene rubbers (EPR), ethylene-propylene-diene rubbers (EPDM), styrene-butadiene rubbers (SBR), isobutene rubbers, nitrile-butadiene rubbers (NBR) and acrylate rubbers. A condition is that the rubber used is modified either with functional groups which are reactive with the polyphenylene oxide and/or the copolymer which contains units of a vinyl-aromatic compound and units of an α,β-unsaturated dicarboxylic acid anhydride, or with polymer chains which are completely or partially compatible with at least one of these components of the polymer composition according to the invention.

Preferably, the rubber is chosen from the group of random, block and graft copolymers based on vinyl-aromatic monomer units and conjugated diene monomers. Examples of such block copolymers are block copolymers of the A-B-A and A-B type, wherein A is polystyrene and B is an elastomer diene, such as, for example, butadiene. The vinyl-aromatic components can be chosen from the group comprising styrene, methylstyrene, dimethylstyrene, isopropylstyrene, α-methylstyrene, ethylvinyltoluene and the like. If desired, small amounts of another monomer, such as (meth)acrylate, (meth)acrylonitrile and (meth)acrylic acid, can be copolymerized.

Graft copolymers of this type are obtained, for example, by graft copolymerization onto a rubber of monomers which consist entirely or partly of vinyl-aromatic monomer units. This rubber can be chosen from the group comprising polybutadiene, styrene-butadiene copolymer, acrylonitrile-butadiene copolymer, ethylene-propylene copolymer, ethylene-propylene-diene rubber, polyacrylate and the like.

A person skilled in the art knows how to select the correct rubber in order even further to improve the mechanical properties of the moulding composition according to the invention.

If desired, additives can be added to the moulding composition according to the invention. Examples of such additives are impact modifiers, stabilizers, antioxidants, lubricants, fillers, dyestuffs, pigments, flame-retardants, reinforcing fibres and conducting fibres.

The invention is further illustrated with the aid of the following examples and comparative experiments, without being restricted thereto.

### Example I and Comparative Experiment A Example I

A polystyrene functionalized by a terminal amine group (PS-NH₂) was prepared by the method which is described in DE-A-3527909. The weight-average molecular weight M_{w} was 36,900. 5.0 grams of the resulting polymer, together with 8.8 grams of poly-(2,6-dimethyl-1,4-phenylene oxide) (PPO, [η]^{int}(CHCl₃, 25°C) = 0.45 dl/g), were then dissolved in chloroform (CHCl₃). The solution thus obtained was precipitated in methanol, after which a homogeneous mixture was obtained.

13.8 grams of the mixture thus obtained were mixed with 15.0 grams of acrylonitrile-butadiene-styrene copolymer (ABS, Ronfalin^{R} TZ220, DSM), 17.5 grams of styrene-maleic anhydride copolymer (SMA, 28% by weight of maleic anhydride, M_{w} = 110,000) and 3.7 grams of styrene-ethylene-butylene-styrene block copolymer (Kraton G1650, Shell). This blending was carried out in a Brabender kneader at a temperature of 220°C and a speed of 50 rpm. To this end, the homogeneous PPO/PS-NH₂ mixture was first prekneaded with SMA and Kraton to give the plastic phase, after which ABS was added and the entire mixture was kneaded for a further 5 minutes.

The blend obtained was pressed on a Fontaine press at a temperature of 220°C in accordance with the following conditions:

| | |
|---|---|
| 7 min. | 0 kN |
| 3 min. | 100 kN |
| 2 min. | 200 kN |
| 5 min. | 500 kN |
| cooling | 500 kN |

Test bars were cut from the plates pressed in this way and these test bars were used to determine the notched bar impact strength (Izod, notched, in accordance with ISO-180) and the heat distortion resistance (Vicat-B, in accordance with ISO-306). The values found for the mechanical properties are given in Table 1.

### Comparative Experiment A

Example I was repeated but in this case a non-functionalized polystyrene (PS) was used in place of a polystyrene functionalized by a terminal amine group. The polystyrene used had a weight-average molecular weight M_{w} of 40,000. The values found for the mechanical properties are given in Table I.

**Table 1**

| Example/experiment | I | A |
|---|---|---|
| Composition (in grams) | | |
| | | |
| SMA | 17.5 | 17.5 |
| ABS TZ 220 | 15.0 | 15.0 |
| PPO/PS | - | 13.8 |
| PPO/PS-NH₂ | 13.8 | - |
| Kraton G1650 | 3.7 | 3.7 |
| | | |
| Izod (kJ/m) | 17.3 | 4.7 |
| Vicat-B (°C) | 134 | 134 |

It can be seen from the Example and the Comparative Experiment that the moulding composition according to the invention has the desired combination of a high heat distortion resistance and a high notched bar impact strength. The mechanical properties of the composition obtained in the Comparative Example is deficient in respect of the notched bar impact strength. It is seen that the use of the functionalized polystyrene leads to a great improvement in the mechanical properties. This is in contrast to the use of non-functionalized polystyrene.

## Claims

1. Thermoplastic polymer composition, comprising a polyphenylene oxide and a copolymer which contains units of a vinyl-aromatic compound and units of an α,β-unsaturated dicarboxylic acid anhydride, characterized in that said composition contains 0.1 - 20% by weight of a polystyrene which contains one or more compounds which contain(s) one or more groups chosen from the group comprising the NH₂, hydroxyl, epoxy and oxazoline groups, with respect to the total weight of the polyphenylene oxide, the copolymer and the polystyrene.

2. Polymer composition according to Claim 1, characterized in that the vinyl-aromatic compound is styrene and/or α-methylstyrene.

3. Polymer composition according to Claim 1 or 2, characterized in that the α,β-unsaturated carboxylic acid anhydride is maleic anhydride.

4. Polymer composition according to one of Claims 1-3, characterized in that the polyphenylene oxide is poly(2,6-dimethyl-1,4-phenylene oxide).

5. Polymer composition according to one of Claims 1-4, characterized in that per 3,000 monomer units the polystyrene contains 1-300 monomer units containing an NH₂ group and/or an oxazoline group.

6. Polymer composition according to one of Claims 1-5, characterized in that the polystyrene polymer is terminally modified with a compound which contains an NH₂ group and/or an oxazoline group.

7. Polymer composition according to Claim 5 or 6, characterized in that the polystyrene has a weight-average molecular weight of between 15,000 and 150,000.

8. Polymer composition according to one of Claims 1 - 7, characterized in that this composition also contains a graft copolymer which comprises
a) 10-60% by weight of a rubber, the glass transition temperature of which is below 0°C, and
b) 40-90% by weight of a copolymer which comprises
b1) 50-90% by weight of units of a vinyl-aromatic compound, and
b2) 10-50% by weight of acrylonitrile.

9. Polymer composition according to Claim 8, characterized in that the graft copolymer is an acrylonitrile-butadiene-styrene rubber.

10. Polymer composition according to one of Claims 1-9, characterized in that this composition also contains a rubber, which is completely or partly compatible with the polyphenylene oxide and/or the copolymer which contains units of a vinyl-aromatic compound and units of an α,β-unsaturated dicarboxylic acid anhydride.

11. Polymer composition according to Claim 10, characterized in that the rubber is chosen from the group comprising random, block and graft copolymers based on vinyl-aromatic monomer units and conjugated diene monomers.

12. Articles entirely or partially manufactured from a polymer composition according to one of Claims 1-11.

## Patentansprüche

1. Thermoplastische Polymerzusammensetzung, umfassend ein Polyphenylenoxid und ein Copolymer, das Einheiten einer Vinyl-aromatischen Verbindung und Einheiten eines α,β-ungesättigten Dicarbonsäureanhydrids enthält, dadurch gekennzeichnet, daß die Zusammensetzung 0,1 bis 20 Masse-%, bezogen auf die Gesamtmasse des Polyphenylenoxids, des Copolymers und des Polystyrols, eines Polystyrols enthält, das eine oder mehrere Verbindungen enthält, enthaltend eine oder mehrere Gruppen, ausgewählt aus der Gruppe umfassend die NH₂-, Hydroxyl-, Epoxy- und Oxazolingruppen.

2. Polymerzusammensetzung nach Anspruch 1, dadurch gekennzeichnet, daß die Vinyl-aromatische Verbindung Styrol und/oder α-Methylstyrol ist.

3. Polymerzusammensetzung nach Anspruch 1 oder 2, dadurch gekennzeichnet, daß das α,β-ungesättigte Carbonsäureanhydrid Maleinsäureanhydrid ist.

4. Polymerzusammensetzung nach einem der Ansprüche 1 bis 3, dadurch gekennzeichnet, daß das Polyphenylenoxid Poly-(2,6-dimethyl-1,4-phenylenoxid) ist.

5. Polymerzusammensetzung nach einem der Ansprüche 1 bis 4, dadurch gekennzeichnet, daß pro 3000 Monomer-Einheiten das Polystyrol 1 bis 300 Monomer-Einheiten, enthaltend eine NH₂-Gruppe und/oder eine Oxazolingruppe, enthält.

6. Polymerzusammensetzung nach einem der Ansprüche 1 bis 5, dadurch gekennzeichnet, daß das Polystyrol-Polymer terminal mit einer Verbindung modifiziert ist, die eine NH₂-Gruppe und/oder eine Oxazolingruppe enthält.

7. Polymerzusammensetzung nach Anspruch 5 oder 6, dadurch gekennzeichnet, daß das Polystyrol eine massenmittlere Molmasse zwischen 15 000 und 150 000 aufweist.

8. Polymerzusammensetzung nach einem der Ansprüche 1 bis 7, dadurch gekennzeichnet, daß diese Zusammensetzung auch ein Pfropfcopolymer enthält, das umfaßt:
a) 10 bis 60 Masse-% eines Kautschuks, dessen Glasübergangstemperatur weniger als 0°C beträgt; und
b) 40 bis 90 Masse-% eines Copolymers, das umfaßt:
bl) 50 bis 90 Masse-% Einheiten einer Vinyl-aromatischen Verbindung, und
b2) 10 bis 50 Masse-% Acrylonitril.

9. Polymerzusammensetzung nach Anspruch 8, dadurch gekennzeichnet, daß das Pfropfcopolymer ein Acrylonitril-Butadien-Styrol-Kautschuk ist.

10. Polymerzusammensetzung nach einem der Ansprüche 1 bis 9, dadurch gekennzeichnet, daß diese Zusammensetzung auch einen Kautschuk enthält, der mit dem Polyphenylenoxid und/oder dem Copolymer, das Einheiten einer Vinyl-aromatischen Verbindung und ein α,β-ungesättigtes Dicarbonsäureanhydrid enthält, vollständig oder teilweise kompatibel ist.

11. Polymerzusammensetzung nach Anspruch 10, dadurch gekennzeichnet, daß der Kautschuk ausgewählt wird aus der Gruppe umfassend Random-, Block- und Pfropfcopolymere auf der Basis Vinyl-aromatischer Monomer-Einheiten und konjugierter Dienmonomere.

12. Artikel, welche gänzlich oder teilweise aus einer Polymerzusammensetzung nach einem der Ansprüche 1 bis 11 hergestellt sind.

## Revendications

1. Composition thermoplastique de polymère, comprenant un oxyde de polyphénylène et un copolymère qui contient des unités d'un composé vinyl-aromatique et des unités d'un anhydride d'acide dicarboxylique α,β-insaturé, caractérisée en ce que ladite composition contient de 0,1 à 20% en poids d'un polystyrène qui contient un ou plusieurs composés qui contient (contiennent) un ou plusieurs groupements choisis dans le groupe comprenant les groupements NH₂, hydroxyle, époxy et oxazoline, par rapport au poids total de l'oxyde de polyphénylène, du copolymère et du polystyrène.

2. Composition de polymère selon la revendication 1, caractérisée en ce que le composé vinyl-aromatique est le styrène et/ou l'α-méthylstyrène.

3. Composition de polymère selon la revendication 1 ou 2, caractérisé en ce que l'anhydride de l'acide dicarboxylique α,β-insaturé est l'anhydride maléique.

4. Composition de polymère selon l'une des revendications 1 à 3, caractérisée en ce que l'oxyde de polyphénylène est l'oxyde de poly(2,6-diméthyl-1,4-phénylène).

5. Composition de polymère selon l'une des revendications 1 à 4, caractérisée en ce que pour 3 000 unités de monomère, le polystyrène contient de 1 à 300 unités de monomère contenant un groupement NH₂ et/ou un groupement oxazoline.

6. Composition de polymère selon l'une des revendications 1 à 5, caractérisée en ce que le polymère polystyrène est modifié en position terminale avec un composé qui contient un groupement NH₂ et/ou un groupement oxazoline.

7. Composition de polymère selon l'une des revendications 5 ou 6, caractérisée en ce que le polystyrène possède un poids moléculaire moyen pondéré compris entre 15 000 et 150 000.

8. Composition de polymère selon l'une des revendications 1 à 7, caractérisée en ce que cette composition contient aussi un copolymère greffé qui comprend:
a) de 10 à 60% en poids d'un caoutchouc, dont la température de transition vitreuse est inférieure à 0°C, et
b) de 40 à 90% en poids d'un copolymère qui comprend:
b1) de 50 à 90% en poids d'unités d'un composé vinyl-aromatique; et
b2) de 10 à 50% en poids d'acrylonitrile.

9. Composition de polymère selon la revendication 8, caractérisée en ce que le copolymère greffé est un caoutchouc acrylonitrile-butadiène-styrène.

10. Composition de polymère selon l'une des revendications 1 à 9, caractérisée en ce que cette composition contient aussi un caoutchouc, qui est entièrement ou partiellement compatible avec l'oxyde de polyphénylène et/ou le copolymère qui contient des unités d'un composé vinyl-aromatique et des unités d'un anhydride d'acide dicarboxylique α,β-insaturé.

11. Composition de polymère selon la revendication 10, caractérisée en ce que le caoutchouc est choisi dans le groupe comprenant des copolymères aléatoires, en masse et greffés à partir d'unités de monomère vinyl-aromatique et de monomère diène conjugué.

12. Articles entièrement ou partiellement fabriqués à partir d'une composition de polymère selon à l'une des revendications 1 à 11.
